(19) Europäisches Patentamt / European Patent Office / Office européen des brevets

(11) **EP 3 667 852 B1**

(12) **EUROPEAN PATENT SPECIFICATION**

(45) Date of publication and mention of the grant of the patent:
**18.05.2022 Bulletin 2022/20**

(21) Application number: **18912566.9**

(22) Date of filing: **27.07.2018**

(51) International Patent Classification (IPC):
$H02J\ 3/00$ (2006.01)   $F03D\ 17/00$ (2016.01)
$G06Q\ 10/06$ (2012.01)   $H02J\ 3/38$ (2006.01)
$G06Q\ 10/04$ (2012.01)   $G06Q\ 50/06$ (2012.01)
$F03D\ 13/00$ (2016.01)   $F03D\ 80/00$ (2016.01)

(52) Cooperative Patent Classification (CPC):
**H02J 3/38; F03D 13/00; F03D 80/00; G06Q 10/04; G06Q 10/063; G06Q 10/06313; G06Q 10/0637; G06Q 10/0639; G06Q 10/067; G06Q 50/06; H02J 3/004;** F05B 2270/20; F05B 2270/32; H02J 2203/10; H02J 2300/28;     (Cont.)

(86) International application number:
**PCT/CN2018/097352**

(87) International publication number:
**WO 2019/184161 (03.10.2019 Gazette 2019/40)**

(54) **MESOSCALE DATA-BASED AUTOMATIC WIND TURBINE LAYOUT METHOD AND DEVICE**

AUF MESOSKALIGEN DATEN BASIERENDES AUTOMATISCHES VERFAHREN UND VORRICHTUNG FÜR EINE WINDTURBINENGESTALTUNG

PROCÉDÉ ET DISPOSITIF D'AGENCEMENT D'ÉOLIENNE AUTOMATIQUE À BASE DE DONNÉES À MÉSOÉCHELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2018 CN 201810270878**

(43) Date of publication of application:
**17.06.2020 Bulletin 2020/25**

(73) Proprietor: **Beijing Goldwind Science & Creation Windpower Equipment Co., Ltd.**
**Beijing 100176 (CN)**

(72) Inventors:
• **ZENG, Chuikuan**
  **Beijing 100176 (CN)**
• **ZHANG, Congcong**
  **Beijing 100176 (CN)**
• **XU, Xiaolong**
  **Beijing 100176 (CN)**

(74) Representative: **advotec.**
**Patent- und Rechtsanwaltspartnerschaft Tappe mbB**
**Widenmayerstraße 4**
**80538 München (DE)**

(56) References cited:
CN-A- 103 514 341      CN-A- 106 250 656
CN-A- 106 250 656      KR-A- 20050 063 616
US-A1- 2009 157 364    US-A1- 2011 208 483
US-A1- 2016 350 453

(52) Cooperative Patent Classification (CPC): (Cont.)
Y02A 90/10; Y02E 10/72; Y02E 10/76; Y04S 10/50

**Description**

**TECHNICAL FIELD**

The present disclosure relates to the field of wind power generation technology, and in particular to a method and a device for automatically arranging a wind turbine based on mesoscale data.

**BACKGROUND**

Using wind turbine automatic arrangement technology, automatic analysis of wind resource data and terrain data can be realized with consideration in the influence of dynamic factors such as wake, thereby realizing automatic arrangement of wind turbines. At present, based on a fully automatic wind turbine optimized arrangement solution, a design subject to minimal influence of wake can be obtained by adopting an appropriate wake model. In addition, when optimizing the wind turbine arrangement, besides considering the influence of wake, multi-objective optimization including factors such as project cost, investment income, and noise may also be considered. For example, the wind turbine automatic arrangement technology widely used in wind turbine industry may include commercial software such as Openwind and WindPro.

However, the conventional wind turbine automatic arrangement algorithm is based on fluid simulation and wind atlas data and is only applicable in a micro-siting stage, where the wind atlas data is obtained based on wind measurement data of a wind measurement tower. In a macro-siting stage, no existing algorithms or software are applicable. For example, CN 106 250 656 A discloses a complicated landform wind field design platform combined with big data, including a data workstation, a simulation platform and a layout optimization platform. The simulation platform includes a mesoscale numerical model module, sub-scale wind resources model module, a wind field flow model module considering landform, and a wake model module. The data workstation includes a wind farm big data platform and a data analysis model module, and the layout optimization platform includes a wind farm generation amount calculation model module and a wind farm layout optimization calculation model module. Further, KR 2005 0063616 A discloses a wind resource mapping method to systematically offering a wind resource map necessary for economic efficiency estimation of a project by selecting a proper project area for wind power generation and estimating power production owing to formation of a wind power generation complex. Besides, US 2011/208483 A1 discloses a method for designing a layout of turbines on a grid, which includes receiving wind data for each possible location of placement of a turbine on said grid; calculating an energy yield for a given layout of turbines on said grid as a nonlinear objective function, said function constrained by said wind data; implementing a bounding heuristic, said bounding heuristic comparing said calculated energy yield for said given layout of turbines to a current lower bound, and if said calculated energy yield is greater than the current lower bound, replacing the current lower bound with the calculated energy yield; and repeating the above steps for different layouts of turbines on the grid.

Therefore, it is of great practical significance to provide a method and a device capable of realizing refined macro-siting.

**SUMMARY**

A method and a device for automatically arranging a wind turbine based on mesoscale data are provided according to the present disclosure.

According to an aspect of the present disclosure, a method for automatically arranging a wind turbine based on mesoscale data is provided. The method includes: performing, based on inputted mesoscale wind atlas data, a first screening on an inputted wind field area by using a wind speed limit to obtain a first wind field area; performing, based on inputted terrain data, a second screening on the first wind field area by using a slope limit to obtain a second wind field area; and determining, by using a method of taboo search having a target number of wind turbines and the second wind field area as inputs, a wind turbine arrangement that renders an objective function optimal, where the objective function is a sum of annual power generations at wind turbine sites.

According to an aspect of the present disclosure, a device for automatically arranging a wind turbine based on mesoscale data is provided. The device includes: a preprocessing unit and a wind turbine arrangement optimization unit. The preprocessing unit is configured to perform, based on inputted mesoscale wind atlas data, a first screening on an inputted wind field area by using a wind speed limit to obtain a first wind field area, and perform, based on inputted terrain data, a second screening on the first wind field area by using a slope limit to obtain a second wind field area. The wind turbine arrangement optimization unit is configured to determine, by using a method of taboo search having a target number of wind turbines and the second wind field area as inputs, a wind turbine arrangement that renders an objective function optimal, where the objective function is a sum of annual power generations at wind turbine sites.

According to an aspect of the present disclosure, a computer readable storage medium is provided. The computer readable storage medium has a program stored thereon, where the program includes instructions for performing the above operations for automatically arranging a wind turbine based on mesoscale data.

According to an aspect of the present disclosure, a computer is provided. The computer includes a readable medium with a computer program stored thereon, where the computer program includes instructions for performing the above operations for automatically arranging a wind turbine based on mesoscale data.

With the method and device for automatically arranging a wind turbine based on mesoscale data, non-optimal wind area can be excluded by setting a wind speed limit, thereby avoiding a large number of useless calculations (that is, improving the efficiency of the algorithm) and inaccurate results caused by too small wind speeds, and areas having a large slope which are not suitable for setting up wind turbines can also be excluded by setting a slope limit, thereby avoiding risky areas and reducing the amount of data for automatic optimizing of wind turbines. In addition, in the above method and device, with the annual power generation used as the objective function, the optimized global automatic arrangement of wind turbines is achieved in the macro-siting stage by using the method of taboo search. As the method of taboo search is more efficient than optimization methods such as genetic algorithms, quick response to service demands can be achieved, and wind turbine arrangement solutions can be generated instantly to effectively support technical applications.

## BRIEF DESCRIPTION OF THE DRAWINGS

Those skilled in the art will completely understand the present disclosure by the following detailed description of the exemplary embodiments of the present disclosure in conjunction with the accompanying drawings, where:

Figure 1 is a general flow chart of a method for automatically arranging a wind turbine based on mesoscale data according to an exemplary embodiment of the present disclosure;

Figure 2 is a flow chart showing a process of calculating an annual average wind speed at each grid point according to an exemplary embodiment of the present disclosure;

Figure 3 is a schematic diagram of an elevation matrix used in performing a screening on mesoscale wind atlas data on which a first screening has been performed according to an exemplary embodiment of the present disclosure;

Figure 4 is a flow chart of operations for determining a wind turbine arrangement by using a method of taboo search according to an exemplary embodiment of the present disclosure;

Figure 5 is a block diagram of a device for automatically arranging a wind turbine based on mesoscale data according to an exemplary embodiment of the present disclosure; and

Figure 6 is a block diagram of an exemplary computer system suitable for implementing the exemplary embodiments of the present disclosure.

## DETAILED DESCRIPTION OF THE EMBODIMENTS

In order to make those skilled in the art more aware of the stage in which the present disclosure is used in the wind turbine siting, a wind turbine macro-siting stage and a wind turbine micro-siting stage are explained in detail first. The wind turbine macro-siting stage and the wind turbine micro-siting stage are different wind turbine siting stages. The wind turbine macro-siting stage is also referred to as a wind farm siting stage. That is, by analyzing and comparing wind resources and other construction conditions at several wind farm sites in a large area, a construction site, development value, development strategy, and development steps of a wind farm are determined. The wind turbine micro-siting stage is a stage of selecting a specific location of a wind turbine, at which a wind measurement tower has been established and annual wind measurement data has been obtained. That is, with consideration in a large number of factors such as costs and benefits, a specific construction site of a wind turbine is optimized based on wind measurement tower information in the wind farm, the annual wind measurement data of the wind measurement tower, and multi-year data from local weather stations. With the present disclosure, a wind turbine arrangement can be quickly determined based on mesoscale data (that is, data with a lower precision than the data measured by the wind measurement tower) in the wind turbine macro-siting stage.

Hereinafter, exemplary embodiments of the present disclosure will be described in detail in conjunction with the drawings, where same reference numbers always represent the same components.

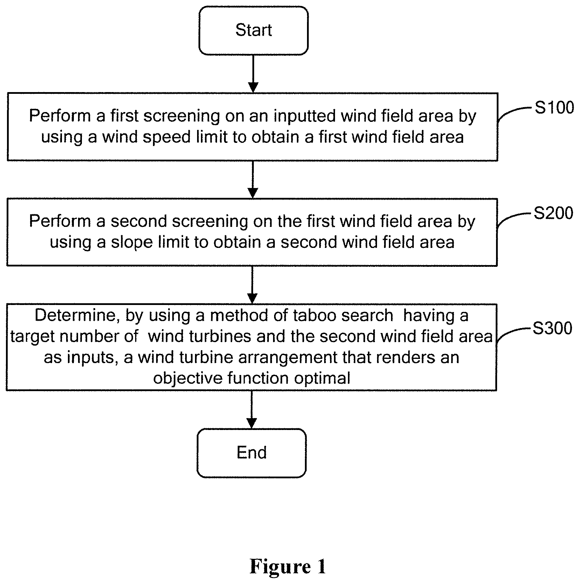

Figure 1 is a general flow chart of a method for automatically arranging a wind turbine based on mesoscale data according to an exemplary embodiment of the present disclosure.

Referring to Figure 1, in step S100, based on inputted mesoscale wind atlas data, a first screening is performed on an inputted wind field area by using a wind speed limit to obtain a first wind field area. The mesoscale wind atlas data is wind resource distribution data which is calculated by using a mesoscale numerical model. In an embodiment, the mesoscale wind atlas data is data of wind resources with typical grid precision at mesoscale level, which is calculated by using the mesoscale numerical model combined with wind measurement data. For example, the mesoscale data may be MERRA-2 (Modem-Era Retrospective analysis for Research and Applications, Version 2) data, that is, the re-analysis data from the global simulation and assimilation office of NASA (National Aeronautics and Space Administration). The mesoscale wind atlas data may include a shape parameter (k) and a scale parameter (a) of an annual Weilbull probability density distribution function for each sector (that is, each wind direction) of each grid point. Or, the mesoscale wind atlas data may include a shape parameter (k) and a scale parameter (a) of an annual Weilbull probability density distribution function at each grid point (that is, k and a of the annual Weilbull probability density distribution function at each grid point without considering the sector). The mesoscale wind atlas data may be inputted into the system in dat or wrg format.

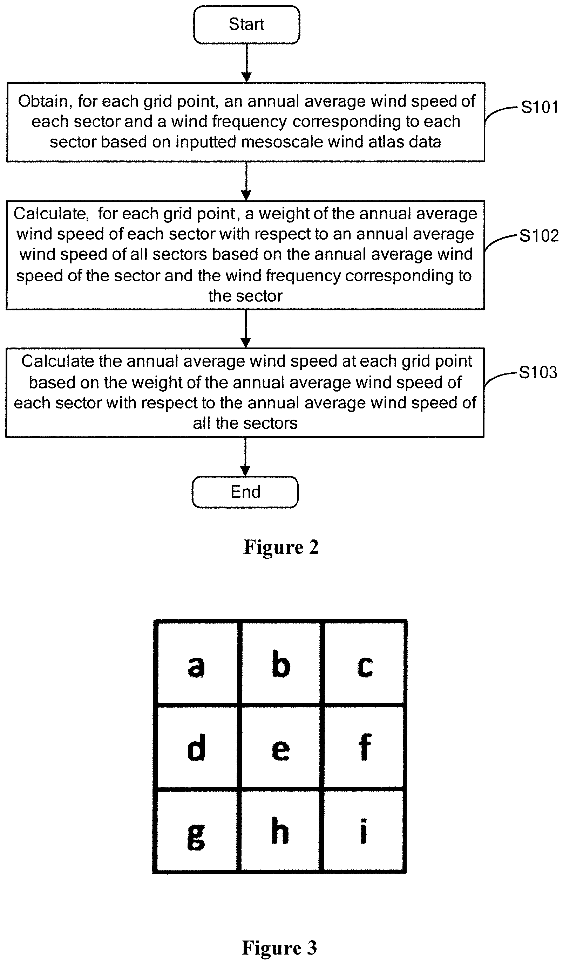

In an embodiment, the performing a first screening on an inputted wind field area by using a wind speed limit to obtain a first wind field area includes: calculating an annual average wind speed at each grid point in the inputted wind field area based on the inputted mesoscale wind atlas data; and removing grid points at which an annual average wind speed is less than the wind speed limit from the inputted wind field area to obtain the first wind field area, that is, removing grid areas including the grid points with an annual average wind speed less than the wind speed limit from the inputted wind field area to obtain the first wind field area. The process of calculating the annual average wind speed at each grid point is described in detail hereinafter with reference to Figure 2.

Figure 2 is a flow chart showing a process of calculating the annual average wind speed at each grid point according to an exemplary embodiment of the present disclosure. The grid point corresponds to a grid in a grid system, where the grid point may be one of four vertices of the corresponding grid or a point at a predetermined position in the corresponding grid. For a grid system corresponding to a mesoscale atlas, a length and a width of each grid may range from 100m to 200m, and the present disclosure is not limited thereto.

As shown in Figure 2, in step S101, for each grid point, an annual average wind speed of each sector and a wind frequency corresponding to each sector are obtained based on the inputted mesoscale wind atlas data, where the sector indicates a wind direction. In an embodiment, an annual average wind speed $V_{ave}^i$ of an $i^{th}$ sector can be calculated by using the following equation (1):

$$V_{ave}^i = a_i \, \Gamma \left( 1 + \frac{1}{k_i} \right) \qquad (1)$$

where $\Gamma$ () represents gamma function, and $a_i$ and $k_i$ represent a scale parameter and a shape parameter of a Weilbull probability density distribution function for the $i^{th}$ sector at a current grid point, respectively. The wind frequency $F_i$ of the $i^{th}$ sector at the current grid point can be calculated by using the following equation (2):

$$F_i = \frac{N_i}{N} \qquad (2)$$

where $N_i$ represents an amount of wind speed data of the $i^{th}$ sector (wind direction), and N represents an amount of wind speed data of all sectors (all wind directions). Generally, the wind frequency $F_i$ of the $i^{th}$ sector can be directly obtained from an inputted mesoscale wind atlas data file or other files.

In step S102, for each grid point, a weight of the annual average wind speed of each sector with respect to an annual average wind speed of all sectors is calculated based on the annual average wind speed of the sector and the wind frequency corresponding to the sector. In an embodiment, for the current grid point, a weight $V_{sector}^i$ of the annual average wind speed of the $i^{th}$ sector with respect to the annual average wind speed of all the sectors can be calculated by using the following equation (3) based on the annual average wind speed $V_{ave}^i$ of the $i^{th}$ sector and the wind frequency $F_i$ corresponding to the $i^{th}$ sector:

$$V_{sector}^i = V_{ave}^i \times F_i \qquad (3)$$

Then, in step S103, an annual average wind speed at each grid point is calculated based on the weight of the annual average wind speed of each sector with respect to the annual average wind speed of all the sectors. In an embodiment, an annual average wind speed $V_{speed}$ (that is, annual average wind speed of all sectors (all wind directions)) at the current grid point can be obtained by adding up weights of the annual average wind speed at the current grid point on all the sectors (wind directions) by using the following equation (4):

$$V_{speed} = \sum_{i=1}^{N} V_{sector}^{i} \qquad (4)$$

where N represents the number of the sectors.

In summary, based on the description with reference to Figure 2, the annual average wind speed at each grid point in the inputted wind field area can finally be calculated.

In addition to the method for calculating the annual average wind speed $V_{speed}$ at each grid point shown in Figure 2, the following method for calculating the annual average wind speed at each grid point may also be used in the present disclosure.

In an embodiment, for a grid point, an annual average wind speed $V_{speed}$ of the grid point can be expressed as:

$$V_{speed} = \int_0^\infty vf(v)dv \qquad (5)$$

where f() represents an annual Weilbull probability density distribution function at the current grid point without considering sectors, and f(v) represents a probability of occurrence of wind speed v at the current grid point, which can be expressed as:

$$f(v) = \frac{k}{a}\left(\frac{v}{a}\right)^{k-1} e^{-(v/a)^k} \qquad (6)$$

where a and k respectively represent a scale parameter and a shape parameter of the annual Weilbull probability density distribution function at the current grid point without considering sectors. The following equation can be derived from the above equations (5) and (6):

$$V_{speed} = a\,\Gamma\left(1 + \frac{1}{k}\right) \qquad (7)$$

where $\Gamma()$ represents gamma function. Thus, the annual average wind speed $V_{speed}$ at each grid point can be calculated using the above equation (7) according to the present disclosure.

The two methods for calculating the annual average wind speed $V_{speed}$ at each grid point have been described as above, but the present disclosure is not limited thereto. Any method for calculating the annual average wind speed at a grid point based on mesoscale wind atlas data can be used in present disclosure.

In addition, the performing a first screening on an inputted wind field area by using a wind speed limit to obtain a first wind field area further includes: removing grid points at which an annual average wind speed is less than the wind speed limit from the inputted wind field area to obtain the first wind field area.

In an embodiment, in order to optimize the inputted wind field area, the annual average wind speed at each grid point in the inputted wind field area may be compared with a preset wind speed limit (for example, 4.5m/s), and the grid points at which the annual average wind speed is less than the wind speed limit is removed from the inputted wind field area, thereby obtaining a wind field area (that is, the first wind field area) on which wind speed optimization has been performed. The preset wind speed limit of 4.5m/s is only exemplary, and the present disclosure is not limited thereto.

Referring back to Figure 1, in step S200, based on inputted terrain data, a second screening is performed on the first wind field area by using a slope limit to obtain a second wind field area.

In practical application, considerations need to be given into terrain when setting up wind turbines, that is, considerations should be given into slopes. Since it is not easy to set up a wind turbine in an area having a large slope, a slope of each grid point in the first wind field area can be calculated based on inputted terrain data by using an elevation matrix, and then grid points having a slope greater than the slope limit can be removed from the first wind field area to obtain the second wind field area, that is, grid areas including the grid points having a slope greater than the slope limit is removed from the first wind field area to obtain the second wind field area. The process of calculating the slope of each grid point is described in detail hereinafter with reference to Figure 3.

For a grid system corresponding to terrain data used in the embodiments of the present disclosure, a length and a width of a grid range from 10m to 40m.

As shown in Figure 3, grids a, b, c, d, f, g, h, and i are around a central grid e and are adjacent to the central grid e. The slope depends on a rate of change (increment) of a surface in a horizontal direction (dz/dx) from the central grid e and a rate of change (increment) of the surface in a vertical direction (dz/dy) from the central grid e. The slope is usually measured in degrees. A slope D of the central grid e can be calculated by using the following equation (8):

$$D= atan ( sqrt ([dz/dx]^2 + [dz/dy]^2) ) * 57.29578 \qquad (8)$$

where [dz/dx] represents a rate of change in x direction from the central grid e, and [dz/dy] represents a rate of change in y direction from the central grid e. [dz/dx] and [dz/dy] can be calculated by using the following equations (9) and (10):

$$[dz/dx] = ((z_c + 2z_f + z_i) - (z_a + 2z_d + z_g) / (8 * x\_cellsize) \qquad (9)$$

$$[dz/dy] = ((z_g + 2z_h + z_i) - (z_a + 2z_b + z_c)) / (8 * y\_cellsize) \qquad (10)$$

where $z_a$, $z_b$, $z_c$, $z_d$, $z_f$, $z_g$, $z_h$, and $z_i$ respectively represent z coordinates of the grids a, b, c, d, f, g, h, and i, and $x\_cellsize$ and $y\_cellsize$ respectively represent dimensions of the grid in x and y directions.

In addition, if z value of a grid adjacent to the central grid e is NoData (that is, there is no data), z value of the central grid e is assigned to the grid adjacent to the central grid e. For example, if on the edge of a grid, z values of at least three grids (that is, grids outside the grid) are NoData, the z value of the central grid e is assigned to the at least three grids.

By using the above equations (8), (9), and (10), the slope of each grid in the first wind field area can be calculated. Since a grid point is a predetermined point in the grid (for example, one of four vertices), a slope of the grid point can be obtained accordingly, and then the grid points each having a slope greater than the slope limit can be removed from the first wind field area to obtain the second wind field area.

For example, the slope of each grid point in the first wind field area can be compared with a slope limit of 15 degrees, and grid points having a slope greater than 15 degrees can be removed from the first wind field area based on the comparison result, thereby realizing slope optimization on the wind field area (that is, the first wind field area) on which wind speed optimization has been performed with the wind speed limit, and obtaining the second wind field area. The slope limit of 15 degrees is only exemplary, and the present disclosure is not limited thereto.

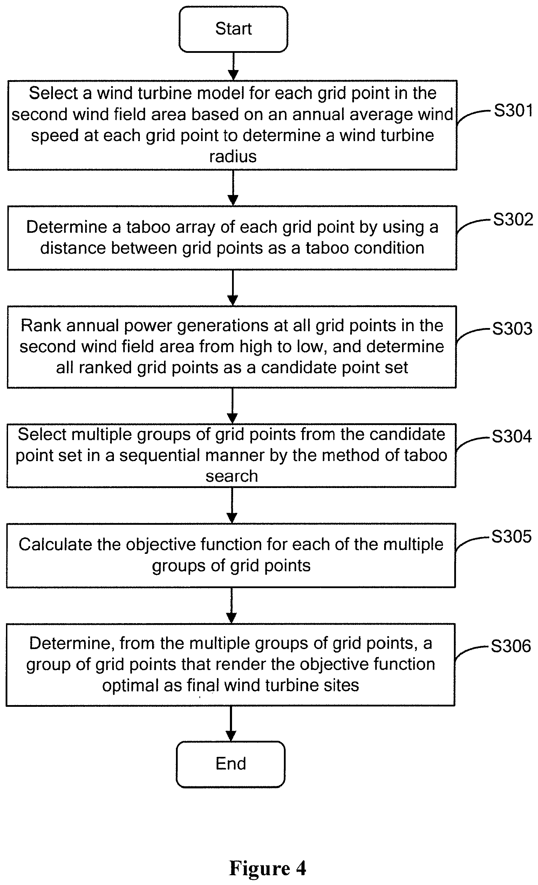

Thereafter, as shown in Figure 1, in step S300, a wind turbine arrangement that renders an objective function optimal is determined by using a method of taboo search having a target number of wind turbines and the second wind field area as inputs, where the objective function is a sum of annual power generations at wind turbine sites. Detail descriptions are provided hereinafter with reference to Figure 4. In the following description, for a grid system corresponding to a mesoscale atlas, a length and a width of each grid may range from 100m to 200m, and the present disclosure is not limited thereto.

Referring to Figure 4, in step S301, for the second wind field area, a wind turbine model is selected for each grid point based on the annual average wind speed at each grid point to determine a wind turbine radius D.

In an embodiment, for the second wind field area obtained by the wind speed optimization and slope optimization, the wind turbine model is selected based on the annual average wind speed at each grid point first, and further, the wind turbine radius is determined based on the selected wind turbine model. For example, if an annual average wind speed at a grid point is 5.0m/s, a wind turbine model of GW121-2000 may be selected, and since the wind turbine model has been determined for the grid point, the wind turbine radius D can be determined.

Then, in step S302, a distance between grid points is used as a taboo condition to determine a taboo array of each grid point.

In an embodiment, after the wind turbine radius D is determined, a distance between grid points can be used as a taboo condition to determine a taboo array of each grid point based on a 3D principle (that is, 3 times the wind turbine radius). In an embodiment, assuming that the 3D principle is adopted, if a distance between a grid point A and a grid point B is less than 3D, the grid point B is added to a taboo array of the grid point A, and if the distance between the grid point A and the grid point B is greater than or equal to 3D, the grid point B is not added to the taboo array of the grid point A. The grid points in the second wind field area are traversed in this way to determine the taboo array of the grid point A. Similarly, a taboo array of each of all grid points in the second wind field area can be determined according to the above process. In addition, while the process of determining the taboo array of each grid point based on the 3D principle is described above, it is only an exemplary embodiment, and the present disclosure is not limited thereto. The taboo array of each grid point may also be determined based on similar principles such as a 5D principle.

In step S303, based on the annual power generation at each grid point in the second wind field area, annual power generations at all grid points in the second wind field area are ranked from high to low, and all the ranked grid points are determined as a candidate point set.

Although not shown in Figure 4, it can be understood that before step S303, the annual power generation at each grid point in the second wind field area may be calculated based on the annual average wind speed at the grid point in the second wind field area.

In an embodiment, after the annual average wind speed at each grid point is calculated, the annual average wind speed $V_{speed}$ at the grid point is divided into n wind speed intervals with an interval of 1m/s (for example, 0 to 1m/s, 1 to 2m/s, ..., 18 to 19m/s, ...), and an annual power generation E of a single wind turbine at each grid point may be calculated by using the following equation (11) with reference to a power curve function:

$$E = \sum_{i=1}^{n} P\left(v_i\right) T_i \qquad (11)$$

where $v_i$ represents an $i^{th}$ interval, $P(v_i)$ represents a pre-given wind turbine power curve, and $T_i$ represents the number of hours of an annual power generation for the $i^{th}$ wind speed interval and is determined by the following equation (12) with the Weilbull cumulative probability distribution function $F(v_i)$ at the corresponding grid point and the fact that a total number $T_t$ of hours in a year is equal to 8760:

$$T_i = [F(v_i + 0.5) - F(v_i - 0.5)] T_t \qquad (12)$$

where $F(v_i+0.5)$ and $F(v_i-0.5)$ are both Weilbull cumulative probability distribution functions and respectively represent a probability of a wind speed being between 0 and $(v_i+0.5)$ and a probability of a wind speed being between 0 and $(v_i-0.5)$, which are given in the following equations (13) and (14):

$$F(v_i + 0.5) = 1 - e^{-\left(\left(v_i+0.5\right)/a\right)^k} \qquad (13)$$

$$F(v_i - 0.5) = 1 - e^{-\left(\left(v_i-0.5\right)/a\right)^k} \qquad (14)$$

In summary, the annual power generation at each grid point can be calculated by the above equations (11) to (14). Thus, all grid points in the second wind field area can be ranked in a descending order by the annual power generations at the grid points, and all the ranked grid points are determined as a candidate point set P, where the number of the grid points in the candidate point set P is much larger than the target number of wind turbines.

In step S304, by the method of taboo search, multiple groups of grid points are selected from the candidate point set P in a sequential manner, where each of the multiple groups of grid points includes at least one grid point meeting the taboo condition. The number of the at least one grid point is equal to the target number of wind turbines.

In an embodiment, when selecting a first group of grid points, the at least one grid point meeting the taboo condition is selected from the candidate point set P by the method of taboo search. The specific process is as follows. First, a first grid point ranked at the first position in the candidate point set P is selected. Then a second grid point is selected from the candidate point set P in order of the annual power generations at the grid points from high to low, and it is determined whether the second grid point is in a taboo array of any one of all preceding grid points (that is, the first grid point). If the second grid point is not in a taboo array of any one of all the preceding grid points (that is, the first grid point), the second grid point is selected as a second member of the first group of grid points; otherwise, the second grid point is not selected as a member of the first group of grid points. Then, it is determined whether a next grid point (that is, a third grid point) in the candidate point set P is in a taboo array of any one of all preceding grid points (that is, the first grid point and the second grid point). Continuing in this way, when determining an $i^{th}$ grid point of the at least one grid point in the first group of grid points, it is determined whether a grid point selected from the candidate point set P in order of the annual power generations from high to low is in a taboo array of any one of all preceding grid points (that is, all the grid points in the candidate point set P before the currently selected grid point). If the selected grid point is not in a taboo array of any one of all the preceding grid points, the grid point selected from the candidate point set P is selected as an $i^{th}$ member of the first group of grid points; otherwise, the grid point selected from the candidate point set P is not selected as the $i^{th}$ member of the first group of grid points. The above process is repeated until the selection of the at least one grid point in the first group of grid points is completed.

Then, when selecting a $j^{th}$ group of grid points, the at least one grid point meeting the taboo condition is selected from the candidate point set P by the method of taboo search, where j is an integer greater than 1. The specific process is as follows. First, a $j^{th}$ grid point ranked at the $j^{th}$ position in the candidate point set P is selected in order of the annual power generations at the grid points from high to low, and the $j^{th}$ grid point is determined as a first member of the $j^{th}$ group of grid points. Then, a next grid point (that is, a $(j+1)^{th}$ grid point) is selected from the candidate point set P in order of the annual power generations at the grid points from high to low, and it is determined whether the next grid point is in a taboo array of any one of all preceding grid points before the next grid point in the candidate point set P. If the next grid point is in a taboo array of any one of all the preceding grid points, the next grid point is not selected as a member of the $j^{th}$ group of grid points; otherwise, the next grid point is selected as a member of the $j^{th}$ group of grid points. The above process is repeated until the selection of the at least one grid point in the $j^{th}$ group of grid points is completed.

In this way, the multiple groups of grid points can be selected from the candidate point set P, where each of the multiple groups of grid points includes at least one grid point meeting the taboo condition. The number of the grid points in the candidate point set P is much larger than the target number of wind turbines; therefore, when selecting the multiple groups of grid points, in order to avoid a waste of computing resources due to traversing all the grid points in the candidate point set P, the process of selecting the multiple groups of grid points from the candidate point set P is terminated when recursion is performed to, for example, only one-half of the candidate point set P, without traversing all the grid points. However, this is only an example, and the present disclosure is not limited thereto. For example, when selecting the multiple groups of grid points, recursion can be performed to, one-third or two-thirds of the candidate point set P.

Then, in step S305, the objective function is calculated for each of the multiple groups of grid points.

In an embodiment, a sum of the annual power generation of the at least one grid point (that is, wind turbine sites) in each group of grid points is determined as the objective function according to the present disclosure. That is, a sum of annual power generations is calculated for each group of the multiple groups of grid points.

Then, in step S306, a group of grid points that render the objective function optimal are selected from the multiple groups of grid points and determined as final wind turbine sites. In an embodiment, in the method, a group of grid points with the largest sum of annual power generations in the multiple groups of grid points is determined as the final wind turbine sites. In this way, the final wind turbine sites, that is, position coordinates of wind turbines, are determined.

For example, Table 1 below shows optimal wind turbine arrangement solutions, which are obtained by processing the inputted wind field area based on the inputted mesoscale wind atlas data and terrain data, under the condition that the target number of wind turbines is 25, the wind speed limit is 4.5m/s and the slope limit is 15 degrees. A total of 8 wind turbine arrangement solutions are listed in order of excellence from top to bottom in Table 1. Each wind turbine arrangement solution includes information of 25 wind turbine sites. The total annual power generations (in kilowatt-hour (kW.h)) for the 25 wind turbine sites are listed in the rightmost column. For each wind turbine arrangement solution, only values of four specific wind turbine sites in the 25 wind turbine sites are shown in Table 1. The information of a wind turbine is X and Y coordinates (in meter (m)) in WGS-84 coordinate system.

Table 1

| | Wind turbine site 1 | Wind turbine site 2 | Wind turbine site 3 | ... | Wind turbine site 25 | Total annual power generation |
|---|---|---|---|---|---|---|
| Solution 1 | X=4386178, Y=38364880 | X=4402378, Y=38364760 | X=4401898, Y=38366920 | ... | X=38378880, Y=4386618 | 169876401.941 |
| Solution 2 | X=38363840, Y=4402658 | X=38378040, Y=4385458 | X=38377640, Y=4385778 | ... | X=38378880, Y=4386618 | 169870715.064 |
| Solution 3 | X=38363880, Y=4402658 | X=38378040, Y=4385458 | X=38377640, Y=4385778 | ... | X=38378880, Y=4386618 | 169716588.998 |
| Solution 4 | X=38363800, Y=4402658 | X=38378040, Y=4385458 | X=38377640, Y=4385778 | ... | X=38378880, Y=4386618 | 169711802.007 |
| Solution 5 | X=38364360, Y=4402618 | X=38378040, Y=4385458 | X=38377640, Y=4385778 | ... | X=38378880, Y=4386618 | 169701852.999 |
| Solution 6 | X=38364280, Y=4402658 | X=38378040, Y=4385458 | X=38377640, Y=4385778 | ... | X=38378880, Y=4386618 | 169699062.307 |
| Solution 7 | X=38363760, Y=4402658 | X=38378040, Y=4385458 | X=38377640, Y=4385778 | ... | X=38378880, Y=4386618 | 169694519.850 |

(continued)

| | | Wind turbine site 1 | Wind turbine site 2 | Wind turbine site 3 | ... | Wind turbine site 25 | Total annual power generation |
|---|---|---|---|---|---|---|---|
| | Solution 8 | X=38378920, Y=4385858 | X=38378040, Y=4385458 | X=38377640, Y=4385778 | ... | X=38378880, Y=4386658 | 169559461.373 |

With the method described above, the arrangement of wind turbines can be finally determined, that is, the site information, annual power generation, and model of each wind turbine can be finally determined.

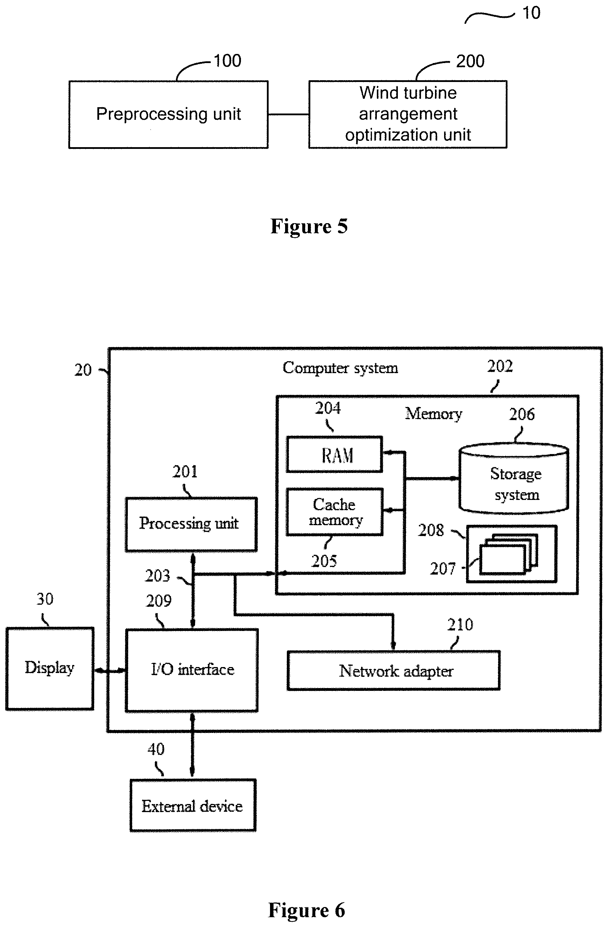

Figure 5 is a block diagram of a device 10 for automatically arranging a wind turbine based on mesoscale data according to an exemplary embodiment of the present disclosure.

Referring to Figure 5, the device 10 includes a preprocessing unit 100 and a wind turbine arrangement optimization unit 200.

The preprocessing unit 100 may be configured to perform, based on inputted mesoscale wind atlas data, a first screening on an inputted wind field area by using a wind speed limit to obtain a first wind field area. The mesoscale wind atlas data is wind resource distribution data which is calculated by using a mesoscale numerical model. In an embodiment, the mesoscale wind atlas data is data of wind resources with typical grid precision at mesoscale level, which is calculated by using the mesoscale numerical model combined with wind measurement data. The mesoscale wind atlas data may include a shape parameter (k) and a scale parameter (a) of an annual Weilbull probability density distribution function for each sector (that is, each wind direction) of each grid point. Or, the mesoscale wind atlas data may include a shape parameter (k) and a scale parameter (a) of an annual Weilbull probability density distribution function at each grid point.

In an embodiment, when performing the first screening on the inputted wind field area, the preprocessing unit 100 may first calculate an annual average wind speed at each grid point in the inputted wind field area based on the inputted mesoscale wind atlas data.

In an embodiment, when calculating the annual average wind speed at each grid point, the preprocessing unit 100 may first obtain, for each grid point, an annual average wind speed of each sector and a wind frequency corresponding to each sector based on the inputted mesoscale wind atlas data, that is, obtaining the annual average wind speed of each sector and the wind frequency corresponding to each sector by the above equations (1) and (2). Since detailed descriptions have been provided as above, the process is not described repeatedly here.

Then, the preprocessing unit 100 may calculate, for each grid point, a weight of the annual average wind speed of each sector with respect to an annual average wind speed of all sectors based on the annual average wind speed of the sector and the wind frequency corresponding to the sector, and calculate the annual average wind speed at each grid point based on the weight of the annual average wind speed of each sector with respect to the annual average wind speed of all the sectors, where the sector indicates a wind direction. In an embodiment, the wind speed of each sector can be calculated by using the above equation (3), and the annual average wind speed at each grid point can be calculated by using the equation (4).

In addition, the preprocessing unit 100 may further calculate the annual average wind speed at each grid point by using the above equation (7).

Since the process of calculating the annual average wind speed at each grid point has been described in detail, it is not repeated here.

After calculating the annual average wind speed at each grid point, the preprocessing unit 100 may remove grid points at which the annual average wind speed is less than the wind speed limit from the inputted wind field area to obtain the first wind field area. For example, the preprocessing unit 100 may compare the annual average wind speed at each grid point in the inputted wind field area with a preset wind speed limit (for example, 4.5m/s), and remove grid points at which the annual average wind speed is less than the wind speed limit from the inputted wind field area to obtain a preliminary screened wind field area (that is, the first wind field area).

In addition, the preprocessing unit 100 may perform, based on inputted terrain data, a second screening on the first wind field area by using a slope limit to obtain a second wind field area.

In practical application, considerations need to be given into terrain (that is, considerations should be given into slopes) when setting up wind turbines, as it is not easy to set up a wind turbine in an area having a large slope. Therefore, after the first screening is performed on the inputted wind field area to obtain the first wind field area, the second screening is required on the first wind field area to remove grid points having an excessive slope to obtain the second wind field area. In an embodiment, the preprocessing unit 100 may calculate a slope of each grid point in the first wind field area based on the inputted terrain data by using an elevation matrix, and remove grid points having a slope greater than the slope limit from the first wind field area to obtain the second wind field area. Since detailed descriptions have been provided above with reference to Figure 3, the process is not described repeatedly here.

After the preprocessing unit 100 performs the first and the second screening on the inputted wind field area, the wind turbine arrangement optimization unit 200 may determine a wind turbine arrangement that renders an objective function optimal by using a method of taboo search having a target number of wind turbines and the second wind field area as inputs, where the objective function is a sum of annual power generations at wind turbine sites.

In an embodiment, the wind turbine arrangement optimization unit 200 may select a wind turbine model for each grid point based on the annual average wind speed at each grid point in the second wind field area to determine a wind turbine radius. For example, if an annual average wind speed at a grid point is 5.0m/s, a wind turbine model of GW121-2000 may be selected by the wind turbine arrangement optimization unit 200 based the annual average wind speed at the grid point, and since the wind turbine model has been determined for the grid point, a wind turbine radius D can be determined by the wind turbine arrangement optimization unit 200.

The wind turbine arrangement optimization unit 200 may use a distance between grid points as a taboo condition to determine a taboo array of each grid point. In an embodiment, after the wind turbine radius D is determined, the wind turbine arrangement optimization unit 200 may use a distance between grid point as a taboo condition to determine a taboo array of each grid point based on a 3D principle (that is, 3 times the wind turbine radius). In an embodiment, assuming that the 3D principle is adopted, if a distance between a grid point A and a grid point B is less than 3D, the grid point B is added to a taboo array of the grid point A by the wind turbine arrangement optimization unit 200; otherwise, the grid point B is not added to the taboo array of the grid point A by the wind turbine arrangement optimization unit 200. Thus, the grid points in the pre-processed wind field area are traversed by the wind turbine arrangement optimization unit 200 in this way to determine the taboo array of the grid point A. Similarly, a taboo array of each of all grid points in the second wind field area can be determined by the wind turbine arrangement optimization unit 200 according to the above process. In addition, while the process of determining a taboo array of each grid point based on the 3D principle is described above, it is only an exemplary embodiment, and the present disclosure is not limited thereto. The taboo array of each grid point in the second wind field area may also be determined by the wind turbine arrangement optimization unit 200 based on similar principles such as a 5D principle.

In addition, the wind turbine arrangement optimization unit 200 may further calculate an annual power generation at each grid point in the second wind field area based on the annual average wind speed at the grid point in the second wind field area. In an embodiment, the wind turbine arrangement optimization unit 200 may calculate the annual power generation at each grid point in the second wind field area by using the above equations (11) to (14). Since detailed descriptions have been provided above, the process is not described repeatedly here.

In addition, the wind turbine arrangement optimization unit 200 may rank annual power generations at all grid points in the second wind field area from high to low based on the annual power generation at each grid point in the second wind field area, and determine all ranked grid points as a candidate point set. Before ranking all the grid points in the second wind field area, the wind turbine arrangement optimization unit 200 may calculate the annual power generation at each grid point in the second wind field area. That is, since the annual power generation at each grid point has been calculated by using the equations (11) to (14), the wind turbine arrangement optimization unit 200 may rank all the grid points in the second wind field area by the annual power generations at the grid points from high to low, and then determine all ranked grid points as a candidate point set.

Thereafter, the wind turbine arrangement optimization unit 200 may select multiple groups of grid points from the candidate point set in a sequential manner, where each of the multiple groups of grid points includes at least one grid point meeting the taboo condition and the number of the at least one grid point is equal to the target number of wind turbines. Since detail descriptions have been provided above, the process is not described repeatedly here.

After selecting the multiple groups of grid points, the wind turbine arrangement optimization unit 200 may calculate the objective function for each of the multiple groups of grid points.

In an embodiment, a sum of the annual power generation at the at least one grid point (that is, a site of the wind turbine) in each group of grid points is determined as the objective function according to the present disclosure. That is, the wind turbine arrangement optimization unit 200 may calculate a sum of annual power generations for each group of the multiple groups of grid points.

Thereafter, the wind turbine arrangement optimization unit 200 selects, from the multiple groups of grid points, a group of grid points that render the objective function optimal and determines the selected group of grid points as final wind turbine sites. In an embodiment, the wind turbine arrangement optimization unit 200 determines a group of grid points with the largest sum of annual power generations in the multiple groups of grid points as the final wind turbine sites. In this way, the final wind turbine sites, that is, position coordinates of wind turbines, are determined.

According to the process described above, the arrangement of wind turbines can be finally determined by the device 10, that is, the site information, annual power generation, and model of each wind turbine can be finally determined.

Figure 6 is a block diagram of an exemplary computer system 20 suitable for implementing the exemplary embodiments of the present disclosure. The computer system 20 shown in Figure 6 is only exemplary, and shall not limit the functions and scope of the embodiments of the present disclosure.

As shown in Figure 6, the computer system 20 may be implemented in the form of a general-purpose computing device. Components of the computer system 20 may include, but are not limited to, one or more processors or processing unit 201, a system memory 202, and a bus 203 for connecting different system components (including the system memory 202 and the processing unit 201).

The bus 203 represents one or more of various bus structures. For example, these bus structures include, but are not limited to: an industry standard architecture (ISA) bus, a micro channel architecture (MAC) bus, an enhanced ISA bus, a video electronics standards association (VESA) local bus, and a peripheral component interconnect (PCI) bus.

The computer system 20 typically includes a variety of computer system-readable media. These media may be any available media that can be accessed by the computer system 20, including volatile and non-volatile media, and removable or non-removable media.

The system memory 202 may include computer system-readable media in a form of volatile memory, such as a random access memory (RAM) 204 and/or a cache memory 205. The computer system 20 may further include other removable/non-removable, volatile/non-volatile computer system storage media. For example only, a storage system 206 may be used to read and write non-removable, non-volatile magnetic media (which is not shown in Figure 6 and is commonly referred to as a "hard drive"). Although not shown in Figure 6, a disk drive for reading and writing of a removable non-volatile disk (such as a floppy disk) and an optical disc drive for reading and writing of a removable non-volatile optical disc (such as a CD-ROM, DVD-ROM, or other optical media) may be provided. In these cases, each drive may be connected to the bus 203 by one or more data medium interfaces. The system memory 202 may include at least one program product, where the program product has at least one program module 207 configured to perform multiple functions according to the embodiments of the present disclosure.

A program/utility tool 208 having the at least one program module 207 may be stored in, for example, the system memory 202. The program module 207 includes, but is not limited to: an operating system, one or more application programs, other program modules, and program data. In addition, each of or some combination of the examples may include an implementation of a network environment. The program module 207 is generally configured to perform functions and/or methods according to the embodiments of the present disclosure.

The computer system 20 may also communicate with a display 30 and one or more other external devices 40 (such as a keyboard, and a pointing device), and may also communicate with one or more devices that enable a user to interact with the computer system 20, and/or may communicate with any device (such as a network card, and a modem) that enables the computer system 20 to communicate with one or more other computing devices. The communication may be performed via an input/output (I/O) interface 209. In addition, the computer system 20 may also communicate with one or more networks (such as a local area network (LAN), a wide area network (WAN), and/or a public network (such as the Internet)) via a network adapter 210. As shown in Figure 6, the network adapter 210 may communicate with other modules of the computer system 20 through the bus 203. It should be understood that although not shown in Figure 6, other hardware and/or software modules may be used in conjunction with the computer system 20, including but not limited to: microcode, device drivers, redundant processing units, external disk drive arrays, RAID systems, tape drives, and data backup storage systems.

It should be noted that Figure 6 only schematically shows a diagram of a computing system for implementing the embodiments of the present disclosure. It can be understood by those skilled in the art that the computer system 20 can be implemented by an existing computing device in a conventional wind turbine, or can be implemented by introducing an additional computing device, or can be implemented by the existing computing device in the wind turbine and the newly introduced device combined.

Furthermore, a computer readable storage medium with a program stored thereon is provided according to the present disclosure. The program includes instructions for performing operations in the method for automatically arranging a wind turbine based on mesoscale data. In an embodiment, the program may include instructions for performing the steps shown in Figures 1, 2, and 4.

Furthermore, a computer is provided according to the present disclosure. The computer includes a readable medium with a computer program stored thereon, where the program includes instructions for performing operations in the method for automatically arranging a wind turbine based on mesoscale data. In an embodiment, the program may include instructions for performing the steps shown in Figures 1, 2, and 4.

With the above method and device for automatically arranging a wind turbine based on mesoscale data, automatically arranging wind turbines in an inputted wind field area based on inputted mesoscale wind atlas data can be realized. With the above method and device, an optimized global automatic arrangement of wind turbines is achieved in the macro-siting stage, the amount of data used for the wind turbine automatic arrangement optimization can be effectively reduced, accuracy can be improved and risky areas can be avoided, thereby achieving quick response to service demands and instantly generating wind turbine arrangement solutions to effectively support technical applications.

The above embodiments of the present disclosure are only exemplary, and shall not be deemed as limiting the present disclosure. Those skilled in the art should understand that changes can be made to the embodiments without departing from the principle of the present disclosure, where the scope of the present invention is solely defined by the appended claims.

**Claims**

1. A method for automatically arranging a wind turbine based on mesoscale data, the method **characterized by** comprising:

    by a preprocessing unit (100)
    performing (S100), based on inputted mesoscale wind atlas data, a first screening on an inputted wind field area by using a wind speed limit to obtain a first wind field area;
    performing (S200), based on an inputted terrain data, a second screening on the first wind field area by using a slope limit to obtain a second wind field area; and
    determining (S300), by a wind turbine arrangement optimization unit (200), by using a method of taboo search having a target number of wind turbines and the second wind field area as inputs, a wind turbine arrangement that renders an objective function optimal,
    wherein the objective function is a sum of annual power generations at wind turbine sites.

2. The method according to claim 1, wherein the performing a first screening on an inputted wind field area by using a wind speed limit to obtain a first wind field area comprises:

    calculating an annual average wind speed at each grid point in the inputted wind field area based on the inputted mesoscale wind atlas data; and
    removing grid points at which an annual average wind speed is less than the wind speed limit from the inputted wind field area to obtain the first wind field area.

3. The method according to claim 2, wherein the calculating an annual average wind speed at each grid point based on the inputted mesoscale wind atlas data comprises:

    obtaining (S101), for each grid point, an annual average wind speed of each sector and a wind frequency corresponding to each sector based on the inputted mesoscale wind atlas data;
    calculating (S102), for each grid point, a weight of the annual average wind speed of each sector with respect to an annual average wind speed of all sectors based on the annual average wind speed of the sector and the wind frequency corresponding to the sector; and
    calculating (S103) the annual average wind speed at each grid point based on the weight of the annual average wind speed of each sector with respect to the annual average wind speed of all the sectors,
    wherein the sector indicates a wind direction.

4. The method according to claim 1, wherein the performing a second screening on the first wind field area by using a slope limit to obtain a second wind field area comprises:

    calculating a slope of each grid point in the first wind field area based on an elevation matrix; and
    removing grid points having a slope greater than the slope limit from the first wind field area to obtain the second wind field area.

5. The method according to claim 1, wherein the determining a wind turbine arrangement that renders an objective function optimal comprises:

    selecting (S301) a wind turbine model for each grid point in the second wind field area based on an annual average wind speed at each grid point to determine a wind turbine radius;
    determining (S302) a taboo array of each grid point by using a distance between grid points as a taboo condition;
    ranking (S303), based on an annual power generation at each grid point in the second wind field area, annual power generations at all grid points in the second wind field area from high to low, and determining all ranked grid points as a candidate point set;
    selecting (S304) a plurality of groups of grid points from the candidate point set in a sequential manner by the method of taboo search, wherein each of the plurality of groups of grid points comprise at least one grid point meeting the taboo condition;
    calculating (S305) the objective function for each of the plurality of groups of grid points; and
    determining (S306), from the plurality of groups of grid points, a group of grid points that render the objective function optimal as final wind turbine sites.

**6.** The method according to claim 5, further comprising:
calculating the annual power generation at each grid point based on the annual average wind speed at the grid point in the second wind field area.

**7.** A device (10) for automatically arranging a wind turbine based on mesoscale data, the device (10) **characterized by** comprising:

a preprocessing unit (100), configured to perform, based on inputted mesoscale wind atlas data, a first screening on an inputted wind field area by using a wind speed limit to obtain a first wind field area, and perform, based on inputted terrain data, a second screening on the first wind field area by using a slope limit to obtain a second wind field area; and

a wind turbine arrangement optimization unit (200), configured to determine, by using a method of taboo search having a target number of wind turbines and the second wind field area as inputs, a wind turbine arrangement that renders an objective function optimal,

wherein the objective function is a sum of annual power generations at wind turbine sites.

**8.** The device (10) according to claim 7, wherein in performing the first screening on the inputted wind field area, the preprocessing unit is configured to calculate an annual average wind speed at each grid point in the inputted wind field area based on the inputted mesoscale wind atlas data, and remove grid points at which an annual average wind speed is less than the wind speed limit from the inputted wind field area to obtain the first wind field area.

**9.** The device (10) according to claim 8, wherein the preprocessing unit (100) is configured to calculate the annual average wind speed at each grid point by the steps of:

obtaining (S101), for each grid point, an annual average wind speed of each sector and a wind frequency corresponding to each sector based on the inputted mesoscale wind atlas data,

calculating (S 102), for each grid point, a weight of the annual average wind speed of each sector with respect to an annual average wind speed of all sectors based on the annual average wind speed of the sector and the wind frequency corresponding to the sector; and

calculating (S103) the annual average wind speed at each grid point based on the weight of the annual average wind speed of each sector with respect to the annual average wind speed of all the sectors,

wherein the sector indicates a wind direction.

**10.** The device (10) according to claim 7, wherein in performing the second screening on the first wind field area, the preprocessing unit (100) is configured to calculate a slope of each grid point in the first wind field area based on an elevation matrix, and remove grid points having a slope greater than the slope limit from the first wind field area to obtain the second wind field area.

**11.** The device (10) according to claim 7, wherein the wind turbine arrangement optimization unit (200) is configured to obtain the wind turbine arrangement that renders the objective function optimal by the steps of:

selecting (S301) a wind turbine model for each grid point in the second wind field area based on an annual average wind speed at each grid point to determine a wind turbine radius;

determining (S302) a taboo array of each grid point by using a distance between grid points as a taboo condition;

ranking (S303), based on an annual power generation at each grid point in the second wind field area, annual power generations at all grid points in the second wind field area from high to low, and determining all ranked grid points as a candidate point set;

selecting (S304) a plurality of groups of grid points from the candidate point set in a sequential manner by the method of taboo search, wherein each of the plurality of groups of grid points comprise at least one grid point meeting the taboo condition;

calculating (S305) the objective function for each of the plurality of groups of grid points; and

determining (S306), from the plurality of groups of grid points, a group of grid points that render the objective function optimal as final wind turbine sites.

**12.** The device (10) according to claim 11, wherein the wind turbine arrangement optimization unit (200) is further configured to calculate the annual power generation at each grid point based on the annual average wind speed at the grid point in the second wind field area.

**13.** A computer readable storage medium with a program stored thereon,
wherein the program comprises instructions for performing the operations according to any one of claims 1 to 6.

**14.** A computer, comprising a readable medium with a computer program stored thereon,
wherein the computer program comprises instructions for performing the operations according to any one of claims 1 to 6.

**Patentansprüche**

**1.** Verfahren zur automatischen Anordnung einer Windturbine anhand von Mesoskalendaten, **dadurch gekennzeichnet, dass** das Verfahren Folgendes umfasst:

Durchführen (S100) eines ersten Screenings auf einem eingegebenen Windfeldgebiet durch eine Vorverarbeitungseinheit (100) anhand eingegebener Mesoskalenwindatlasdaten unter Verwendung eines Windgeschwindigkeitsgrenzwerts zum Erhalten eines ersten Windfeldgebiets;
Durchführen (S200) eines zweiten Screenings auf dem ersten Windfeldgebiet durch die Vorverarbeitungseinheit (100) anhand eingegebener Geländedaten unter Verwendung eines Gefällegrenzwerts zum Erhalten eines zweiten Windfeldgebiets; und
Bestimmen (S300) einer Windturbinenanordnung, die eine Zielfunktion optimal macht, durch eine Windturbinenanordnungsoptimierungseinheit (200) unter Verwendung eines Tabu-Suche-Verfahrens mit einer Zielanzahl an Windturbinen und dem zweiten Windfeldgebiet als Eingaben,
wobei die Zielfunktion eine Summe jährlicher Stromerzeugungen an Windturbinenaufstellorten ist.

**2.** Verfahren nach Anspruch 1, wobei das Durchführen eines ersten Screenings auf einem eingegebenen Windfeldgebiet unter Verwendung eines Windgeschwindigkeitsgrenzwerts zum Erhalten eines ersten Windfeldgebiets Folgendes umfasst:

Berechnen einer jährlichen mittleren Windgeschwindigkeit an jedem Gitterpunkt in dem eingegebenen Windfeldgebiet anhand der eingegebenen Mesoskalenwindatlasdaten; und
Entfernen von Gitterpunkten, an denen eine jährliche mittlere Windgeschwindigkeit den Windgeschwindigkeitsgrenzwert unterschreitet, aus dem eingegebenen Windfeldgebiet zum Erhalten des ersten Windfeldgebiets.

**3.** Verfahren nach Anspruch 2, wobei das Berechnen einer jährlichen mittleren Windgeschwindigkeit an jedem Gitterpunkt anhand der eingegebenen Mesoskalenwindatlasdaten Folgendes umfasst:

Erhalten (S101) einer jährlichen mittleren Windgeschwindigkeit jedes Sektors und einer jedem Sektor entsprechenden Windfrequenz anhand der eingegebenen Mesoskalenwindatlasdaten für jeden Gitterpunkt;
Berechnen (S102) einer Gewichtung der jährlichen mittleren Windgeschwindigkeit jedes Sektors bezogen auf eine jährliche mittlere Windgeschwindigkeit aller Sektoren anhand der jährlichen mittleren Windgeschwindigkeit des Sektors und der dem Sektor entsprechenden Windfrequenz für jeden Gitterpunkt; und
Berechnen (S103) der jährlichen mittleren Windgeschwindigkeit an jedem Gitterpunkt anhand der Gewichtung der jährlichen mittleren Windgeschwindigkeit jedes Sektors bezogen auf die jährliche mittlere Windgeschwindigkeit aller Sektoren, wobei der Sektor eine Windrichtung anzeigt.

**4.** Verfahren nach Anspruch 1, wobei das Durchführen eines zweiten Screenings auf dem ersten Windfeldgebiet anhand eines Gefällegrenzwerts zum Erhalten eines zweiten Windfeldgebiets Folgendes umfasst:

Berechnen eines Gefälles jedes Gitterpunkts in dem ersten Windfeldgebiet anhand einer Höhenmatrix; und
Entfernen von Gitterpunkten mit einem Gefälle, das den Gefällegrenzwert überschreitet, aus dem ersten Windfeldgebiet zum Erhalten des zweiten Windfeldgebiets.

**5.** Verfahren nach Anspruch 1, wobei das Bestimmen einer Windturbinenanordnung, die eine Zielfunktion optimal macht, Folgendes umfasst:

Auswählen (S301) eines Windturbinenmodells für jeden Gitterpunkt in dem zweiten Windfeldgebiet anhand einer jährlichen mittleren Windgeschwindigkeit an jedem Gitterpunkt zur Bestimmung eines Windturbinenradius;
Bestimmen (S302) einer Tabu-Matrix jedes Gitterpunkts unter Verwendung eines Abstands zwischen Gitterpunkten als eine Tabu-Bedingung;

Ordnen (S303) jährlicher Stromerzeugungen an allen Gitterpunkten in dem zweiten Windfeldgebiet von hoch nach niedrig anhand einer jährlichen Stromerzeugung an jedem Gitterpunkt in dem zweiten Windfeldgebiet und Bestimmen aller geordneten Gitterpunkte als ein Kandidatenpunktesatz;

sequenzielles Auswählen (S304) einer Vielzahl von Gruppen von Gitterpunkten aus dem Kandidatenpunktesatz nach dem Tabu-Suche-Verfahren, wobei die Vielzahl von Gruppen von Gitterpunkten jeweils mindestens einen Gitterpunkt umfassen, der die Tabu-Bedingung erfüllt;

Berechnen (S305) der Zielfunktion für jede der Vielzahl von Gruppen von Gitterpunkten; und

Bestimmen (S306) einer Gruppe von Gitterpunkten aus der Vielzahl von Gruppen von Gitterpunkten, die die Zielfunktion optimal machen, als endgültige Windturbinenaufstellorte.

6. Verfahren nach Anspruch 5, des Weiteren umfassend:

Berechnen der jährlichen Stromerzeugung an jedem Gitterpunkt anhand der jährlichen mittleren Windgeschwindigkeit an dem Gitterpunkt in dem zweiten Windfeldgebiet.

7. Vorrichtung (10) zur automatischen Anordnung einer Windturbine anhand von Mesoskalendaten, **dadurch gekennzeichnet, dass** die Vorrichtung (10) Folgendes umfasst:

eine Vorverarbeitungseinheit (100), die dazu ausgebildet ist, zum Erhalten eines ersten Windfeldgebiets ein erstes Screening auf einem eingegebenen Windfeldgebiet anhand eingegebener Mesoskalenwindatlasdaten unter Verwendung eines Windgeschwindigkeitsgrenzwerts durchzuführen und zum Erhalten eines zweiten Windfeldgebiets ein zweites Screening auf dem ersten Windfeldgebiet anhand eingegebener Geländedaten unter Verwendung eines Gefällegrenzwerts durchzuführen; und

eine Windturbinenanordnungsoptimierungseinheit (200), die dazu ausgebildet ist, unter Verwendung eines Tabu-Suche-Verfahrens mit einer Zielanzahl an Windturbinen und dem zweiten Windfeldgebiet als Eingaben eine Windturbinenanordnung zu bestimmen, die eine Zielfunktion optimal macht,

wobei die Zielfunktion eine Summe jährlicher Stromerzeugungen an Windturbinenaufstellorten ist.

8. Vorrichtung (10) nach Anspruch 7, wobei die Vorverarbeitungseinheit dazu ausgebildet ist, bei der Durchführung des ersten Screenings auf dem eingegebenen Windfeldgebiet eine jährliche mittlere Windgeschwindigkeit an jedem Gitterpunkt in dem eingegebenen Windfeldgebiet anhand der eingegebenen Mesoskalenwindatlasdaten zu berechnen und Gitterpunkte, an denen eine jährliche mittlere Windgeschwindigkeit den Windgeschwindigkeitsgrenzwert unterschreitet, aus dem eingegebenen Windfeldgebiet zu entfernen, um das erste Windfeldgebiet zu erhalten.

9. Vorrichtung (10) nach Anspruch 8, wobei die Vorverarbeitungseinheit (100) dazu ausgebildet ist, die jährliche mittlere Windgeschwindigkeit an jedem Gitterpunkt durch folgende Schritte zu berechnen:

Erhalten (S101) einer jährlichen mittleren Windgeschwindigkeit jedes Sektors und einer jedem Sektor entsprechenden Windfrequenz anhand der eingegebenen Mesoskalenwindatlasdaten für jeden Gitterpunkt;

Berechnen (S102) einer Gewichtung der jährlichen mittleren Windgeschwindigkeit jedes Sektors bezogen auf eine jährliche mittlere Windgeschwindigkeit aller Sektoren anhand der jährlichen mittleren Windgeschwindigkeit des Sektors und der dem Sektor entsprechenden Windfrequenz für jeden Gitterpunkt; und

Berechnen (S103) der jährlichen mittleren Windgeschwindigkeit an jedem Gitterpunkt anhand der Gewichtung der jährlichen mittleren Windgeschwindigkeit jedes Sektors bezogen auf die jährliche mittlere Windgeschwindigkeit aller Sektoren, wobei der Sektor eine Windrichtung anzeigt.

10. Vorrichtung (10) nach Anspruch 7, wobei die Vorverarbeitungseinheit (100) dazu ausgebildet ist, bei der Durchführung des zweiten Screenings auf dem ersten Windfeldgebiet ein Gefälle jedes Gitterpunkts in dem ersten Windfeldgebiet anhand einer Höhenmatrix zu berechnen und Gitterpunkte mit einem Gefälle, das den Gefällegrenzwert überschreitet, aus dem ersten Windfeldgebiet zu entfernen, um das zweite Windfeldgebiet zu erhalten.

11. Vorrichtung (10) nach Anspruch 7, wobei die Windturbinenanordnungsoptimierungseinheit (200) dazu ausgebildet ist, die die Zielfunktion optimal machende Windturbinenanordnung durch folgende Schritte zu erhalten:

Auswählen (S301) eines Windturbinenmodells für jeden Gitterpunkt in dem zweiten Windfeldgebiet anhand einer jährlichen mittleren Windgeschwindigkeit an jedem Gitterpunkt zur Bestimmung eines Windturbinenradius;

Bestimmen (S302) einer Tabu-Matrix jedes Gitterpunkts unter Verwendung eines Abstands zwischen Gitterpunkten als eine Tabu-Bedingung;

Ordnen (S303) jährlicher Stromerzeugungen an allen Gitterpunkten in dem zweiten Windfeldgebiet von hoch nach niedrig anhand einer jährlichen Stromerzeugung an jedem Gitterpunkt in dem zweiten Windfeldgebiet und Bestimmen aller geordneten Gitterpunkte als ein Kandidatenpunktesatz;
sequenzielles Auswählen (S304) einer Vielzahl von Gruppen von Gitterpunkten aus dem Kandidatenpunktesatz nach dem Tabu-Suche-Verfahren, wobei die Vielzahl von Gruppen von Gitterpunkten jeweils mindestens einen Gitterpunkt umfassen, der die Tabu-Bedingung erfüllt;
Berechnen (S305) der Zielfunktion für jede der Vielzahl von Gruppen von Gitterpunkten; und
Bestimmen (S306) einer Gruppe von Gitterpunkten aus der Vielzahl von Gruppen von Gitterpunkten, die die Zielfunktion optimal machen, als endgültige Windturbinenaufstellorte.

12. Vorrichtung (10) nach Anspruch 11, wobei die Windturbinenanordnungsoptimierungseinheit (200) des Weiteren dazu ausgebildet ist, die jährliche Stromerzeugung an jedem Gitterpunkt anhand der jährlichen mittleren Windgeschwindigkeit an dem Gitterpunkt in dem zweiten Windfeldgebiet zu berechnen.

13. Computerlesbares Speichermedium mit einem darauf gespeicherten Programm, wobei das Programm Befehle zur Durchführung der Operationen nach einem der Ansprüche 1 bis 6 umfasst.

14. Computer, umfassend ein lesbares Medium mit einem darauf gespeicherten Computerprogramm, wobei das Computerprogramm Befehle zur Durchführung der Operationen nach einem der Ansprüche 1 bis 6 umfasst.

**Revendications**

1. Procédé d'arrangement automatique d'une éolienne sur la base de données de méso-échelle, **caractérisé en ce que** le procédé comprend les étapes consistant à :

   par une unité de prétraitement (100),
   effectuer (S100), sur la base de données d'atlas éolien de méso-échelle entrées, un premier examen d'une zone de champ de vent entrée en utilisant une limite de vitesse de vent afin d'obtenir une première zone de champ de vent ;
   effectuer (S200), sur la base de données de terrain entrées, un deuxième examen de la première zone de champ de vent en utilisant une limite de pente afin d'obtenir une deuxième zone de champ de vent ; et
   déterminer (S300), par une unité d'optimisation (200) d'arrangement d'éolienne, en utilisant un procédé de recherche tabou ayant un nombre cible d'éoliennes et la deuxième zone de champ de vent comme entrées, un arrangement d'éolienne qui fournit un optimum de fonction objective,
   dans lequel la fonction objective est une somme de générations d'électricité annuelles à des sites d'éolienne.

2. Procédé selon la revendication 1, dans lequel l'étape consistant à effectuer un premier examen d'une zone de champ de vent entrée en utilisant une limite de vitesse de vent afin d'obtenir une première zone de champ de vent comprend les étapes consistant à :

   calculer une vitesse de vent moyenne annuelle à chaque point de grille dans la zone de champ de vent entrée sur la base des données d'atlas éolien de méso-échelle entrées ; et
   enlever des points de grille auxquels une vitesse de vent moyenne annuelle est inférieure à la limite de vitesse de vent de la zone de champ de vent entrée afin d'obtenir la première zone de champ de vent.

3. Procédé selon la revendication 2, dans lequel l'étape consistant à calculer une vitesse de vent moyenne annuelle à chaque point de grille sur la base des données d'atlas éolien de méso-échelle entrées comprend les étapes consistant à :

   obtenir (S101), pour chaque point de grille, une vitesse de vent moyenne annuelle de chaque secteur et une fréquence de vent correspondant à chaque secteur sur la base des données d'atlas éolien de méso-échelle entrées ;
   calculer (S 102), pour chaque point de grille, une pondération de la vitesse de vent moyenne annuelle de chaque secteur par rapport à une vitesse de vent moyenne annuelle de tous les secteurs sur la base de la vitesse de vent moyenne annuelle du secteur et la fréquence de vent correspondant au secteur ; et
   calculer (S 103) la vitesse de vent moyenne annuelle à chaque point de grille sur la base de la pondération de la vitesse de vent moyenne annuelle de chaque secteur par rapport à la vitesse de vent moyenne annuelle de tous les secteurs ,
dans lequel le secteur indique une direction de vent.

**4.** Procédé selon la revendication 1, dans lequel l'étape consistant à effectuer un deuxième examen de la première zone de champ de vent en utilisant une limite de pente afin d'obtenir une deuxième zone de champ de vent comprend les étapes consistant à :

calculer une pente de chaque point de grille dans la première zone de champ de vent sur la base d'une matrice d'élévation ; et
enlever des points de grille ayant une pente supérieure à la limite de pente de la première zone de champ de vent afin d'obtenir la deuxième zone de champ de vent.

**5.** Procédé selon la revendication 1, dans lequel l'étape consistant à déterminer un arrangement d'éolienne qui fournit un optimum de fonction objective comprend les étapes consistant à :

sélectionner (S301) un modèle d'éolienne pour chaque point de grille dans la deuxième zone de champ de vent sur la base d'une vitesse de vent moyenne annuelle à chaque point de grille afin de déterminer un rayon d'éolienne ;
déterminer (S302) une matrice de tabou de chaque point de grille en utilisant une distance entre des points de grille comme condition de tabou ;
classer (S303), sur la base d'une génération d'électricité annuelle à chaque point de grille dans la deuxième zone de champ de vent, des générations d'électricité annuelles à tous les points de grille dans la deuxième zone de champ de vent en ordre descendant et déterminer tous les points de grille classés comme jeu de points candidats ;
sélectionner (S304) une pluralité de groupes de points de grille parmi le jeu de points candidats de manière séquentielle par le procédé de recherche de tabou, dans lequel chacun de la pluralité de groupes de points de grille comprend au moins un point de grille satisfaisant la condition de tabou ;
calculer (S305) la fonction objective pour chacun de la pluralité de groupes de points de grille ; et
déterminer (S306), parmi la pluralité de groupes de points de grille, un groupe de points de grille qui fournissent l'optimum de fonction objective comme sites d'éolienne finaux.

**6.** Procédé selon la revendication 5, comprenant en outre l'étape consistant à :
calculer la génération d'électricité annuelle à chaque point de grille sur la base de la vitesse de vent moyenne annuelle au point de grille dans la deuxième zone de champ de vent.

**7.** Dispositif (10) d'arrangement automatique d'une éolienne sur la base de données de méso-échelle, **caractérisé en ce que** le dispositif (10) comprend :

une unité de prétraitement (100) configurée pour effectuer, sur la base de données d'atlas éolien de méso-échelle entrées, un premier examen d'une zone de champ de vent entrée en utilisant une limite de vitesse de vent afin d'obtenir une première zone de champ de vent et effectuer, sur la base de données de terrain entrées, un deuxième examen de la première zone de champ de vent en utilisant une limite de pente afin d'obtenir une deuxième zone de champ de vent ; et
une unité d'optimisation (200) d'arrangement d'éolienne configurée pour déterminer, en utilisant un procédé de recherche de tabou ayant un nombre cible d'éoliennes et la deuxième zone de champ de vent comme entrées, un arrangement d'éolienne qui fournit un optimum de fonction objective,
dans lequel la fonction objective est une somme de générations d'électricité annuelles à des sites d'éolienne.

**8.** Dispositif (10) selon la revendication 7, dans lequel, lors de la réalisation du premier examen de la zone de champ de vent entrée, l'unité de prétraitement est configurée pour calculer une vitesse de vent moyenne annuelle à chaque point de grille dans la zone de champ de vent entrée sur la base des données d'atlas éolien de méso-échelle entrées et enlever des points de grille auxquels une vitesse de vent moyenne annuelle est inférieure à la limite de vitesse de vent de la zone de champ de vent entrée afin d'obtenir la première zone de champ de vent.

**9.** Dispositif (10) selon la revendication 8, dans lequel l'unité de prétraitement (100) est configurée pour calculer la vitesse de vent moyenne annuelle à chaque point de grille par les étapes consistant à :

obtenir (S 101), pour chaque point de grille, une vitesse de vent moyenne annuelle de chaque secteur et une fréquence de vent correspondant à chaque secteur sur la base des données d'atlas éolien de méso-échelle entrées ;

calculer (S 102), pour chaque point de grille, une pondération de la vitesse de vent moyenne annuelle de chaque secteur par rapport à une vitesse de vent moyenne annuelle de tous les secteurs sur la base de la vitesse de vent moyenne annuelle du secteur et la fréquence de vent correspondant au secteur ; et

calculer (S 103) la vitesse de vent moyenne annuelle à chaque point de grille sur la base de la pondération de la vitesse de vent moyenne annuelle de chaque secteur par rapport à la vitesse de vent moyenne annuelle de tous les secteurs ,

dans lequel le secteur indique une direction de vent.

10. Dispositif (10) selon la revendication 7, dans lequel, lors de la réalisation du deuxième examen de la première zone de champ de vent, l'unité de prétraitement (100) est configurée pour calculer une pente de chaque point de grille dans la première zone de champ de vent sur la base d'une matrice d'élévation et enlever des points de grille ayant une pente supérieure à la limite de pente de la première zone de champ de vent afin d'obtenir la deuxième zone de champ de vent.

11. Dispositif (10) selon la revendication 7, dans lequel l'unité d'optimisation (200) d'arrangement d'éolienne est configurée pour obtenir l'arrangement d'éolienne qui fournit l'optimum de fonction objective par les étapes consistant à :

sélectionner (S301) un modèle d'éolienne pour chaque point de grille dans la deuxième zone de champ de vent sur la base d'une vitesse de vent moyenne annuelle à chaque point de grille afin de déterminer un rayon d'éolienne ;

déterminer (S302) une matrice de tabou de chaque point de grille en utilisant une distance entre des points de grille comme condition de tabou ;

classer (S303), sur la base d'une génération d'électricité annuelle à chaque point de grille dans la deuxième zone de champ de vent, des générations d'électricité annuelles à tous les points de grille dans la deuxième zone de champ de vent en ordre descendant et déterminer tous les points de grille classés comme jeu de points candidats ;

sélectionner (S304) une pluralité de groupes de points de grille parmi le jeu de points candidats de manière séquentielle par le procédé de recherche de tabou, dans lequel chacun de la pluralité de groupes de points de grille comprend au moins un point de grille satisfaisant la condition de tabou ;

calculer (S305) la fonction objective pour chacun de la pluralité de groupes de points de grille ; et

déterminer (S306), parmi la pluralité de groupes de points de grille, un groupe de points de grille qui fournissent l'optimum de fonction objective comme sites d'éolienne finaux.

12. Dispositif (10) selon la revendication 11, dans lequel l'unité d'optimisation (200) d'arrangement d'éolienne est configurée en outre pour calculer la génération d'électricité annuelle à chaque point de grille sur la base de la vitesse de vent moyenne annuelle au point de grille dans la deuxième zone de champ de vent.

13. Support de stockage lisible par ordinateur avec un programme stocké sur celui-ci, dans lequel le programme comprend des instructions pour effectuer les opérations selon l'une quelconque des revendications 1 à 6.

14. Ordinateur, comprenant un support lisible avec un programme d'ordinateur stocké sur celui-ci, dans lequel le programme d'ordinateur comprend des instructions pour effectuer les opérations selon l'une quelconque des revendications 1 à 6.

```
        ┌─────────────┐
        │    Start     │
        └─────────────┘
               │
               ▼
┌───────────────────────────────────────────────┐
│ Perform a first screening on an inputted wind   │  ─ S100
│ field area by using a wind speed limit to       │
│ obtain a first wind field area                  │
└───────────────────────────────────────────────┘
               │
               ▼
┌───────────────────────────────────────────────┐
│ Perform a second screening on the first wind    │  ─ S200
│ field area by using a slope limit to obtain a   │
│ second wind field area                          │
└───────────────────────────────────────────────┘
               │
               ▼
┌───────────────────────────────────────────────┐
│ Determine, by using a method of taboo search    │  ─ S300
│ having a target number of wind turbines and the │
│ second wind field area as inputs, a wind turbine│
│ arrangement that renders an objective function  │
│ optimal                                         │
└───────────────────────────────────────────────┘
               │
               ▼
        ┌─────────────┐
        │     End      │
        └─────────────┘
```

**Figure 1**

```
                    ┌─────────────┐
                    │    Start    │
                    └─────────────┘
                           │
                           ▼
┌──────────────────────────────────────────────┐
│ Obtain, for each grid point, an annual average │       S101
│ wind speed of each sector and a wind frequency │ ─
│   corresponding to each sector based on        │
│    inputted mesoscale wind atlas data          │
└──────────────────────────────────────────────┘
                           │
                           ▼
┌──────────────────────────────────────────────┐
│ Calculate, for each grid point, a weight of the │
│ annual average wind speed of each sector with   │      S102
│  respect to an annual average wind speed of all │ ─
│ sectors based on the annual average wind speed  │
│  of the sector and the wind frequency           │
│          corresponding to the sector            │
└──────────────────────────────────────────────┘
                           │
                           ▼
┌──────────────────────────────────────────────┐
│ Calculate the annual average wind speed at each │
│  grid point based on the weight of the annual   │      S103
│ average wind speed of each sector with respect  │ ─
│   to the annual average wind speed of all the   │
│                    sectors                      │
└──────────────────────────────────────────────┘
                           │
                           ▼
                    ┌─────────────┐
                    │     End     │
                    └─────────────┘
```

**Figure 2**

| a | b | c |
|---|---|---|
| d | e | f |
| g | h | i |

**Figure 3**

Start

Select a wind turbine model for each grid point in the second wind field area based on an annual average wind speed at each grid point to determine a wind turbine radius — S301

Determine a taboo array of each grid point by using a distance between grid points as a taboo condition — S302

Rank annual power generations at all grid points in the second wind field area from high to low, and determine all ranked grid points as a candidate point set — S303

Select multiple groups of grid points from the candidate point set in a sequential manner by the method of taboo search — S304

Calculate the objective function for each of the multiple groups of grid points — S305

Determine, from the multiple groups of grid points, a group of grid points that render the objective function optimal as final wind turbine sites — S306

End

**Figure 4**

10

100

200

Preprocessing unit

Wind turbine arrangement optimization unit

**Figure 5**

Computer system

20

202

204

Memory

206

RAM

Storage system

201

Cache memory

Processing unit

208

205

207

203

209

30

210

Display

I/O interface

Network adapter

40

External device

**Figure 6**

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106250656 A
- KR 20050063616 A
- US 2011208483 A1